(19) Europäisches Patentamt / European Patent Office / Office européen des brevets

(11) EP 3 300 083 B1

(12) **EUROPEAN PATENT SPECIFICATION**

(45) Date of publication and mention of the grant of the patent:
**12.05.2021 Bulletin 2021/19**

(21) Application number: **16855184.4**

(22) Date of filing: **25.08.2016**

(51) Int Cl.:
*G21F 9/36* (2006.01) *G01T 1/167* (2006.01)
*G21D 1/00* (2006.01) *G21F 9/28* (2006.01)

(86) International application number:
**PCT/JP2016/074890**

(87) International publication number:
**WO 2017/064930 (20.04.2017 Gazette 2017/16)**

(54) **METHOD OF DETERMINING CONDITIONS FOR ACCOMMODATING RADIOACTIVE WASTE IN CONTAINER AND RADIOACTIVE WASTE ACCOMMODATING METHOD**

VERFAHREN ZUR BESTIMMUNG DER ZUSTÄNDE ZUR UNTERBRINGUNG VON RADIOAKTIVEM ABFALL IN EINEM BEHÄLTER UND VERFAHREN ZUR UNTERBRINGUNG VON RADIOAKTIVEM ABFALL

PROCÉDÉ DE DÉTERMINATION DE CONDITIONS DE LOGEMENT DE DÉCHETS RADIOACTIFS DANS UN RÉCIPIENT ET PROCÉDÉ DE LOGEMENT DE DÉCHETS RADIOACTIFS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2015 JP 2015204470**

(43) Date of publication of application:
**28.03.2018 Bulletin 2018/13**

(73) Proprietor: **Mitsubishi Heavy Industries, Ltd.**
**Tokyo 108-8215 (JP)**

(72) Inventors:
- **OKAMOTO, Tomohisa**
  **Tokyo 108-8215 (JP)**
- **KUROKAWA, Noboru**
  **Tokyo 108-8215 (JP)**
- **KOMURO, Toshiya**
  **Tokyo 108-8215 (JP)**
- **UMAKOSHI, Toshimitsu**
  **Tokyo 108-8215 (JP)**
- **KOMATSU, Naotaka**
  **Tokyo 108-8215 (JP)**

(74) Representative: **Cabinet Beau de Loménie**
**158, rue de l'Université**
**75340 Paris Cedex 07 (FR)**

(56) References cited:
**JP-A- S6 289 000**
**JP-A- S6 289 000**
**JP-A- S59 126 297**
**JP-A- S59 126 297**
**JP-A- S60 146 200**
**JP-A- 2002 207 098**
**JP-A- 2002 207 098**
**JP-A- 2015 087 300**
**JP-A- 2015 087 300**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 300 083 B1

## Description

TECHNICAL FIELD

The present disclosure relates to a method for accommodating waste pieces obtained by cutting radioactive waste efficiently into a storage container, and a waste body produced by the method.

BACKGROUND ART

Radioactive waste discharged from a nuclear facility, for instance, is stored permanently in a completely sealed state. Thus, the amount of stored radioactive waste keeps increasing year by year, and the storage cost is also rising. Under such a situation, it is desirable to reduce the volume of radioactive waste as much as possible.

Patent Document 1 discloses a cutting volume reduction device for cutting a control-rod cluster guide tube into segments and accommodating the segments into individual storage containers, to enable safe recovery of control-rod cluster guide tubes disposed inside a reactor vessel. Furthermore, Patent Document 2 discloses a volume reduction process of placing a thin board on a cartridge accommodating radioactive waste, pressing the board from above with a compressing device, accommodating another radioactive waste while maintaining the compressed state, and repeating the process of pressurizing from above in turn, before fixing the top part with a lid. Moreover, Patent Document 2 discloses a volume reduction processing device for pulverizing radioactive waste, and compressing an accommodation bag filled with the pulverized matters by evacuation. Besides, JP 2015 087300 discloses a plant demolition plan support apparatus and plant demolition plan support method; JP S62 89000 discloses a method of filling and processing radioactive waste; JP 2002-207098 discloses a method for treating radioactive solid waste; and JP S60 146200 discloses a method of filling radioactive waste.

Citation List

Patent Literature

Patent Document 1: JP2014-098596A
Patent Document 2: JP2000-065990A
Patent Document 3: JP2011-080873A

SUMMARY

Problems to be Solved

However, in the accommodation method described in Patent Document 1, there is no measure for improving the efficiency of filling a storage container with the plurality of segments obtained by dividing a control-rod cluster guide tube, and thus the accommodation space inside the storage container is not fully utilized. Thus, the accommodation method described in Patent Document 1 has a problem that an unnecessarily large number of storage containers are required. In other words, in the invention of Patent Document 1, while waste pieces obtained by cutting and reducing the volume of radioactive waste are stored in at least one storage container to produce waste bodies, the amount of waste bodies cannot be reduced. As a result, in the invention of Patent Document 1, the number of waste bodies to be produced increases unnecessarily, and thus the space of a storage building for storing waste bodies until the final disposal is not fully utilized. Furthermore, with the unnecessarily large number of waste bodies being produced, the cost for transporting waste bodies to the storage building also increases.

Furthermore, the cutting volume reducing method of Patent Document 2 is not flexible, for radioactive waste needs to be cut out in accordance with the capacity of the storage container (so that the segments are not too small nor too large compared to the capacity of the storage container), which limits the manner of cutting considerably. Furthermore, radioactive waste with an extremely high radiation level, such as core structure, should not be pulverized into small pieces (e.g. particles), to prevent radioactive contamination from spreading, and thus it is difficult to apply the cutting volume reduction method of Patent Document 3.

In view of the above, an object of at least one embodiment of the present invention is to provide a method for determining conditions for accommodating in a container, by accommodating a plurality of waste pieces efficiently in a storage container to reduce the necessary number of storage containers while satisfying physical limiting conditions required for each waste body, an accommodation method for accommodating the plurality of pieces in a storage container in accordance with the method for determining conditions for accommodating in a container, and a waste body obtained by the method.

Solution to the Problems

(1) The invention is defined by the appended claims. In particular, in at least one embodiment of the present invention, a container accommodation condition determination method of determining an accommodation condition for accommodating a plurality of waste pieces, obtained by at least cutting radioactive waste, into at least one storage container, for obtaining at least one waste body by accommodating the plurality of waste pieces into the at least one storage container, comprises: a step of, assuming, for each of a plurality of arrangement condition candidates specifying the storage container in which each of the waste pieces is to be stored and an accommodation position inside the storage container, that the waste pieces are arranged inside the storage container in accordance with the arrangement condition candidate, selecting at least one of the arrangement condition candidates which satisfy a limiting condition required for the waste body in each of the storage containers; a step of calculating a necessary storage container number which is the number of the storage container required to accommodate the plurality of waste pieces in accordance with the selected arrangement condition candidate; and a step of specifying the arrangement condition candidate such that the necessary storage container number is minimum.
Accordingly, at least in an embodiment of the present invention, the storage container in which each waste piece is to be stored and an accommodation position in the storage container are defined by the arrangement condition candidate. Further, in at least one embodiment of the present invention, from among the plurality of arrangement condition candidates, at least one arrangement condition candidate satisfying the limiting condition is selected, and the arrangement condition candidate capable of reducing the number storage containers required to accommodate the plurality of waste pieces is determined as the accommodation condition for accommodating waste pieces in the storage container. The accommodation for the waste pieces obtained as described is a condition among the plurality of arrangement condition candidates, which satisfies the limiting condition of each waste body and is associated with the smallest necessary storage container number.
Therefore, according to at least one embodiment of the present invention, it is possible to accommodate the plurality of waste pieces in the storage container efficiently, and to reduce the necessary number of storage containers, while satisfying the physical limiting condition required for each waste body.
(2) Furthermore, in some embodiments of the present invention, the above method (1) comprises, performing, for each of a plurality of cutting conditions for cutting the radioactive waste, the step of selecting the arrangement condition candidate and the step of calculating the necessary storage container number, and specifying a combination of the cutting condition and the arrangement condition candidate such that the necessary storage container number is minimum.
As described above, according to the above configuration (2), it is possible to define various cutting manners for cutting the radioactive waste to obtain the plurality of waste pieces as the plurality of cutting conditions, and calculate an accommodation condition capable of reducing the number of waste bodies obtained by accommodating the waste pieces in the storage containers for each of the plurality of cutting conditions. As a result, according to the above configuration (2), it is possible to specify the most efficient combination of a cutting condition and an arrangement condition, as an accommodation condition capable of reducing the number of waste bodies by accommodating the waste pieces in the storage containers efficiently.
(3) Furthermore, in some embodiments of the present invention, in the above method (1) or (2), the method further comprises a step of obtaining a dose distribution of the radioactive waste, and the step of selecting the arrangement condition candidate includes selecting the arrangement condition candidate satisfying the limiting condition which at least specifies that a surface dose rate of the waste body is not higher than a threshold on the basis of the dose distribution.
When discarding or storing the waste bodies, it may be necessary to ensure safety and efficiency. The above method (3) is beneficent in such cases. That is, according to the above method (3), the surface dose rate of each waste body is set to be not higher than the threshold on the basis of the dose distribution of the radioactive waste, and thereby it is possible to reduce the number of storage containers required, while ensuring safety and efficiency in discarding or storing the waste bodies.
(4) Furthermore, in some embodiments of the present invention, in the above method (1) or (2), the method further comprises a step of measuring a dose of each of the waste pieces, and the step of selecting the arrangement condition candidate may include selecting the arrangement condition candidate satisfying the limiting condition which at least specifies that a surface dose rate of the waste body is not higher than a threshold on the basis of the dose of the waste pieces.

When discarding or storing the waste bodies, it may be necessary to ensure safety and efficiency. The above method (4) is beneficent in such cases. That is, according to the above method (4), the surface dose rate of each waste body is set to be not higher than the threshold on the basis of the dose distribution of the radioactive waste, and thereby it is possible to reduce the number of storage containers required, while ensuring safety and efficiency in discarding or storing the waste bodies.

(5) Furthermore, in some embodiments of the present invention, in the above methods (1) to (4), the method further comprises a step of storing, in a database, characteristic descriptive information showing a characteristic of each of the plurality of waste pieces, and the step of selecting the arrangement condition candidate may include determining whether the limiting condition required for the waste body is satisfied in each of the storage containers when the waste pieces are arranged in the storage containers in accordance with the arrangement condition candidate, on the basis of the characteristic descriptive information stored in the database.

Accordingly, with the above configuration (5), the operation for selecting the arrangement condition candidate defining the arrangement manner for arranging the waste pieces in the storage container is performed on the basis of the characteristic descriptive information showing the characteristics of each waste piece, and thereby it is possible to perform efficient volume reduction in accordance with the characteristics of each waste piece.

(6) Furthermore, in some embodiments of the present invention, in the above method (5), the character specific information includes at least one of a shape, a weight, or a dose, of each of the waste pieces.

Accordingly, with the above configuration (6), it is possible to select the arrangement condition candidate taking into account the shape, weight, or dose of the waste pieces.

(7) Furthermore, in some embodiments of the present invention, in the above methods (1) to (6), the method further comprises a step of compressing a plurality of segments obtained by cutting the radioactive waste to shape the segments into the plurality of waste pieces having at least one kind of standardized shape.

Accordingly, with the above configuration (7), the waste pieces are accommodated into a storage container after shaping the plurality of waste pieces obtained by cutting the radioactive waste into waste piece having a standardized shape (including dimensions). Thus, with the above configuration (7), it is possible to considerably simplify the computation process for determining the accommodation condition for reducing the amount of waste bodies obtained by accommodating the waste pieces in the storage container. Furthermore, with the above configuration (7), by designing the standardized shape appropriately, it is possible to calculate an accommodation condition such that it is possible to stuff the waste pieces into the storage container with smallest possible clearance.

(8) Furthermore, in some embodiments of the present invention, in the above methods (1) to (7), the limiting condition required for the waste body includes a condition such that at least one of a weight, a surface dose rate, or a heat generation amount, of each of the waste bodies is within an allowable range.

To implement some embodiments of the present invention, it may be necessary to ensure safety and efficiency in works for transporting the waste bodies to a site for long-term storage. Even in such a case, with the above configuration (8), at least one of the dose rate, weight, or heat generation amount of each waste body is set to be within an allowable range on the basis of the dose distribution of the radioactive waste, and thereby it is possible to reduce the number of storage containers required, while ensuring safety and efficiency in the transportation works for the waste bodies.

(9) Furthermore, in some embodiments of the present invention, in the above methods (1) to (8), the plurality of arrangement condition candidates include at least one arrangement condition candidate specifying that, inside each of the storage containers, a first waste piece is accommodated in a first region disposed in a center section of the storage container and a second waste piece is disposed in a second region surrounding the first region in the storage container so as to envelope the first waste piece, the second waste piece having a lower dose than the first waste piece.

According to the above method (9), if the selected arrangement condition candidate defines an arrangement such that the low-dose second waste pieces envelop the high-dose first waste piece, it is possible to reduce the dose that reaches the surface of the waste body thanks to the function as the radiation insulator of the low-dose second waste pieces enveloping the high-dose first waste piece, even in a case where the high-dose first waste piece is accommodated inside the storage container. Thus, if the plurality of arrangement condition candidates include a candidate defining the arrangement manner of the waste pieces according to the above method (9), it is possible to increase the possibility of the arrangement condition candidate satisfying the limiting condition, even in a situation where few storage containers are available and a large number of high-dose waste pieces need to be accommodated in the containers. Thus, a great amount of high-dose waste pieces can be accommodated as compared to a typical accommodation method, and it is possible to increase the filling rate of the waste pieces inside the storage container, which makes it possible to reduce the number of waste bodies compared to a typical accommodation method.

(10) Furthermore, in some embodiments of the present invention, the method may comprises a step of accommodating the waste pieces inside the storage container in accordance with the accommodation condition determined by the container accommodation condition determination method according to any one of the above methods (1) to (9) to obtain at least one waste body.

Accordingly, with the above configuration (10), by using the container accommodation condition determining method described in the above (1) to (9), it is possible to implement the embodiments of the present invention as a method of accommodating a plurality of waste pieces in at least one storage container.

(11) In at least one embodiment of the present disclosure, a method of obtaining at least one waste body by accommodating a plurality of waste pieces, obtained by at least cutting radioactive waste, into at least one storage container, comprises: a step of accommodating a first waste piece in a first region positioned in a center section of the storage container; and a step of accommodating a second waste piece in a second region surrounding the first region in the storage container such that the second waste piece envelops the first waste piece, the second waste piece having a lower dose than the first waste piece.

As described above, in at least one embodiment of the present disclosure, the relatively low-dose waste pieces are arranged so as to envelop, as a radiation insulator, the relatively high-dose waste piece accommodated in the middle of the storage container. Accordingly, if the selected arrangement condition candidate defines an arrangement such that the low-dose waste pieces envelop the high-dose waste piece, it is possible to reduce the dose that reaches the surface of the waste body thanks to the function as the radiation insulator of the low-dose waste pieces enveloping the high-dose waste piece disposed inside the storage container. Thus, if the plurality of arrangement condition candidates include a candidate defining the arrangement manner of the waste pieces according to the above method (11), it is possible to increase the possibility of the arrangement condition candidate satisfying the limiting condition, even in a situation where few storage containers are available and a large number of high-dose waste pieces need to be accommodated in the containers. Thus, a great amount of high-dose waste pieces can be accommodated as compared to a typical accommodation method, and it is possible to increase the filling rate of the waste pieces inside the storage container, which makes it possible to reduce the number of waste bodies compared to a typical accommodation method.

(12) In at least one embodiment of the present disclosure, a waste body obtained by accommodating a plurality of waste pieces obtained by at least cutting a radioactive waste into at least one storage container comprises: a first waste piece accommodated in a first region positioned in a center section of the storage container; and a second waste piece accommodated in a second region surrounding the first region in the storage container such that the second waste piece envelops the first waste piece, the second waste piece having a lower dose than the first waste piece.

As described above, the waste body according to the above embodiment (12) is produced such that the low-dose waste pieces are arranged so as to envelop, as a radiation insulator, the high-dose waste piece accommodated in the middle of the storage container. Thus, the waste body according to the above embodiment (12) can accommodate a greater number of high-dose waste pieces in a storage container with a high filling rate, as compared to a typical accommodation method. Furthermore, the waste body according to the above embodiment (12) includes low-dose waste pieces that function as a radiation insulator, surrounding a high-dose waste piece accommodated inside the storage container. Accordingly, the waste body according to the above embodiment (12) can reduce the surface dose rate and heat generation amount of the surface of the waste body effectively even if a high-dose waste piece is accommodated, which makes it possible to facilitate disposal works and storage works for the waste bodies.

## Advantageous Effects

According to at least one embodiment of the present invention, it is possible to accommodate the plurality of waste pieces in the storage container efficiently, and to reduce the necessary number of storage containers, while satisfying the physical limiting condition required for each waste body.

## BRIEF DESCRIPTION OF DRAWINGS

FIG. 1 is a diagram showing an overall flow of a method for processing radioactive waste according to an embodiment of the present invention.

FIG. 2 is a diagram showing a first example of a plurality of arrangement condition candidates according to an embodiment of the present invention.

FIG. 3 is a diagram showing a second example of a plurality of arrangement condition candidates according to an embodiment of the present invention.

FIG. 4 is a diagram showing a corresponding relationship among combinations of cutting conditions and arrangement condition candidates, satisfiability of the limiting conditions, and the necessary number of storage containers.

FIG. 5 is a diagram showing an example of cutting conditions of radioactive waste according to an embodiment of the present invention.
FIG. 6 is a diagram showing a computer system according to an embodiment of the present invention.
FIG. 7 is a flowchart showing a flow of a series of processing operations according to an embodiment of the present invention.
FIG. 8 is a diagram showing an overall flow of a method for processing radioactive waste according to a modified example of the present invention.
FIG. 9 is a diagram showing a process for shaping waste pieces into a standardized shape according to an embodiment of the present invention.
FIG. 10 is a diagram showing a computer system according to the present embodiment of the present invention.
FIG. 11 is a flowchart showing a flow of a series of processing operations according to the present embodiment.
FIG. 12 is a diagram showing waste pieces accommodated in a storage container according to the present embodiment.

## DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

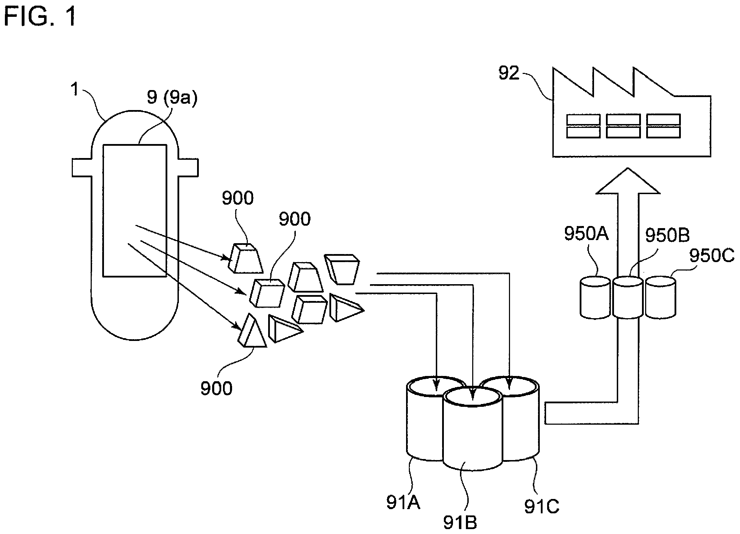

FIG. 1 is a diagram showing an overall flow of a method for processing radioactive waste according to an embodiment. As shown in FIG. 1, in some embodiments, an accommodation condition for accommodating a plurality of waste pieces 900 obtained by at least cutting radioactive waste 9 into at least one storage container 91 (91A to 91C) is determined, and the waste pieces 900 are accommodated in the storage container 91 (91A to 91C) in accordance with the accommodation condition to obtain a waste body 950 (950A to 950C).

Furthermore, in the exemplary embodiment shown in FIG. 1, a reactor internal structure 9a inside a reactor vessel 11 is shown as an example the radioactive waste 9. However, in another embodiment, the radioactive waste 9 may be a reactor vessel, a steam generator, piping, or the like, other than the reactor internal structure. In yet another embodiment, the radioactive waste 9 may be low-level radioactive waste discharged from a nuclear-related facility.

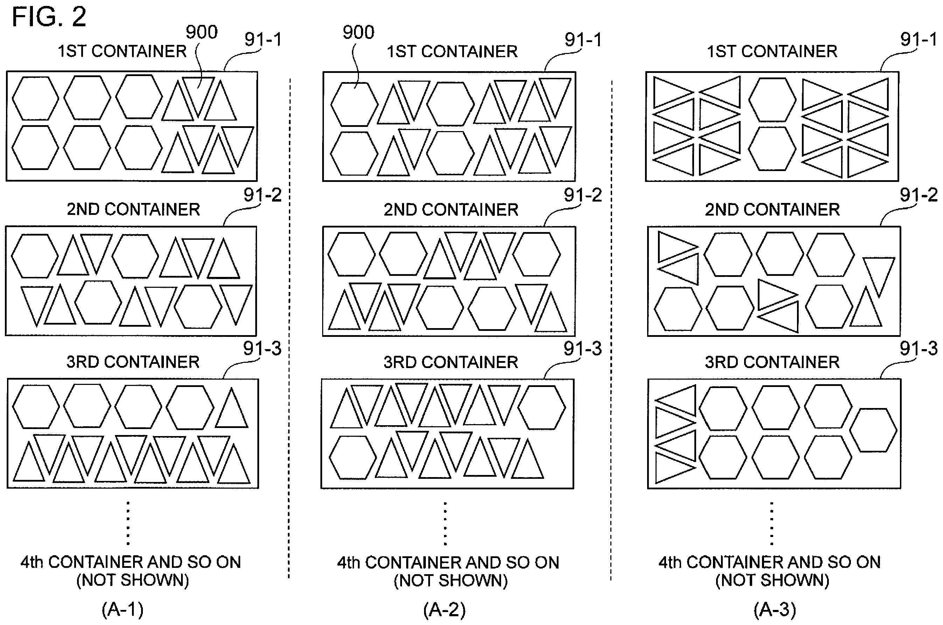

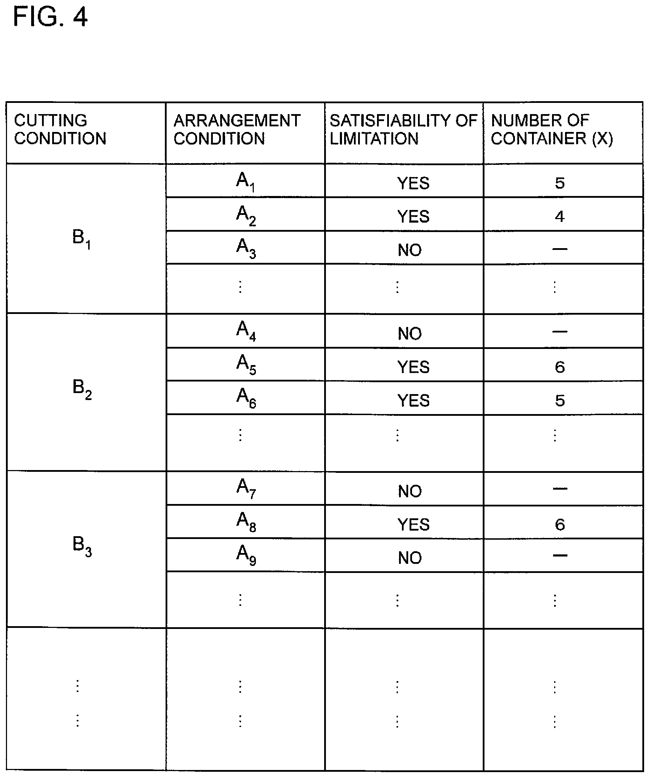

Next, with reference to FIGs. 2 to 4, "arrangement condition candidate" and "limiting condition" will be described. Subsequently, with reference to FIG. 4, a method of determining an accommodation condition for accommodating waste pieces 900 into the storage container 91 will be described in detail.

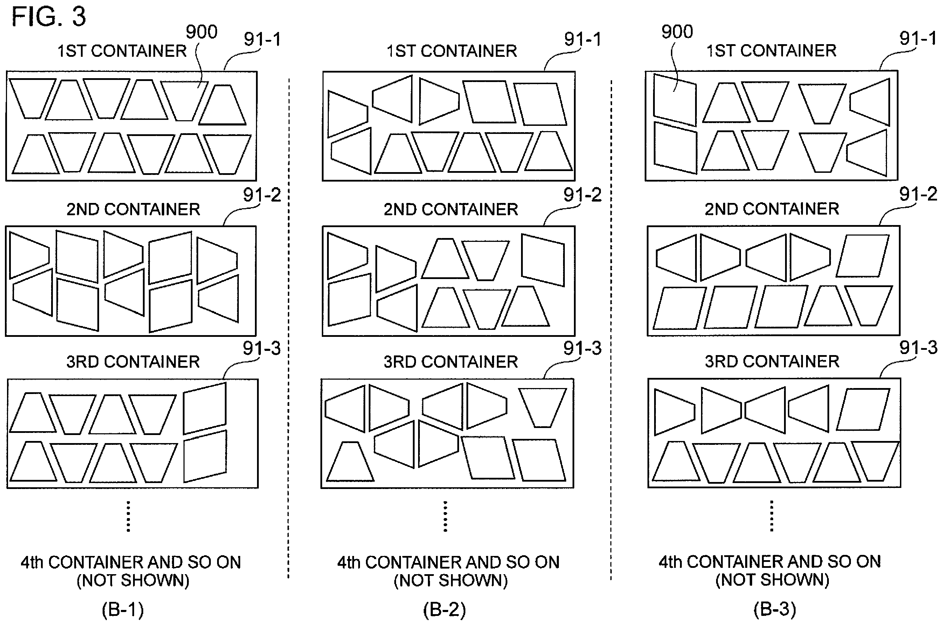

Herein, FIGs. 2 and 3 are each a diagram showing an example of a plurality of arrangement condition candidates used in the waste disposal method shown in FIG. 1. Furthermore, FIG. 4 is a diagram showing a corresponding relationship among, combinations of the arrangement condition candidates, satisfiability of the limiting conditions, and the necessary number of storage containers 91, according to an embodiment of the present invention.

As shown in FIGs. 2 and 3, the respective waste pieces 900 can be accommodated in the storage container 91 (91A to 91C) in different patterns, regarding in which storage container 91 the waste pieces 900 are to be accommodated, and the positions inside the storage container 91. The arrangement condition candidates are conditions that specify such patterns. Specifically, the arrangement condition candidates are conditions that determine which storage container 91 (91A to 91C) is to accommodate each of the waste pieces 900, and the accommodation position inside the storage container 91 (91A to 91C).

Normally, the waste pieces 900 each have a three-dimensional shape (including dimensions) that is random and not uniform. However, in FIGs. 2 and 3, to simplify the description, each waste piece 900 is shown in a simple two-dimensional shape. The drawings show schematic examples where the waste pieces 900 are each accommodated in two-dimensional manner inside a space inside a box-shaped container, shown as a rectangular two-dimensional region. In the examples shown in FIGs. 2 and 3, the waste pieces 900 have different shapes. Furthermore, in the examples shown in FIGs. 2 and 3, the specific accommodation positions of the waste pieces 900 inside the containers are shown only for the first three storage containers 91-1 to 91-3, and the specific accommodation position is not shown for the fourth and following storage containers 91. Furthermore, as an arrangement condition for determining the accommodation manner for accommodating the plurality of waste pieces 900 into at least one storage container 91, other arrangement conditions may be used, besides the arrangement condition shown in FIGs. 2 and 3.

The limiting condition refers to restrictions related to the characteristics of the waste body 950, which are required to be satisfied by the waste body 950 as a whole. In an embodiment, the limiting condition includes a condition such that at least one of weight, surface dose rate, or heat generation amount, of each waste body 950 should fall within an allowable range. In yet another embodiment, the limiting condition includes a condition such that all of weight, surface dose rate, and heat generation amount, of each waste body 950 should fall within an allowable range.

In some embodiments, assuming that the waste pieces 900 are arranged in the storage containers 91 in accordance with each of the N arrangement condition candidates A; (1≤i≤N, where N is an integer not less than two) as shown in FIG. 4, and it is determined whether the limiting condition required for a waste body is satisfied, in each storage container 91 (91A to 91C). Then, from among the i arrangement condition candidates, one or more arrangement condition candidates satisfying the limiting condition required for a waste body in each storage container 91 (91A to 91C) are selected.

In the exemplary embodiment shown in FIG. 4, the arrangement condition candidates $A_1$, $A_2$, $A_5$, $A_6$, $A_8$ are the conditions satisfying the limiting condition.

In some embodiments, when selecting arrangement condition candidates, j (1≤j≤N) arrangement condition candidates are selected, which satisfy the limiting condition that specifies at least the surface dose rate of the waste body 950 (950A to 950C) is not higher than a threshold, on the basis of the dose distribution of the radioactive waste 9.

Accordingly, it is possible to reduce the necessary number of storage containers 91 (91A to 91C) while ensuring safety and efficiency of the transportation work for the waste body 950 (950A to 950C).

The method for obtaining the dose distribution of the radioactive waste 9 is not particularly limited. For instance, the dose distribution may be obtained from a result of measurement of the dose distribution of the radioactive waste 9 at a plurality of measurement points, or may be estimated on the basis of the previous radiation exposure history of the radioactive waste 9.

After selecting j arrangement condition candidates $A'_j$ satisfying the limiting condition, subsequently, the number X of storage containers necessary (necessary storage container number) for accommodation of the plurality of waste pieces 900 according to each of the arrangement condition candidates $A'_j$ (1≤j≤N) is calculated. The necessary storage container number X is calculated for each of the arrangement condition candidates satisfying the limiting condition.

After calculating the necessary storage container number X for each of the arrangement condition candidates satisfying the limiting condition, an arrangement condition candidate associated with the smallest necessary storage container number X is specified.

Accordingly, the obtained arrangement condition candidate one of the i arrangement condition candidates A that have been studied, which satisfies the limiting condition and is associated with the smallest necessary storage container number X. Therefore, according to the above described method, it is possible to accommodate the plurality of waste pieces 900 in the storage container 91 efficiently, and to reduce the necessary storage container number X, which is the number of storage containers 91 required, while satisfying the physical limiting condition required for each waste body.

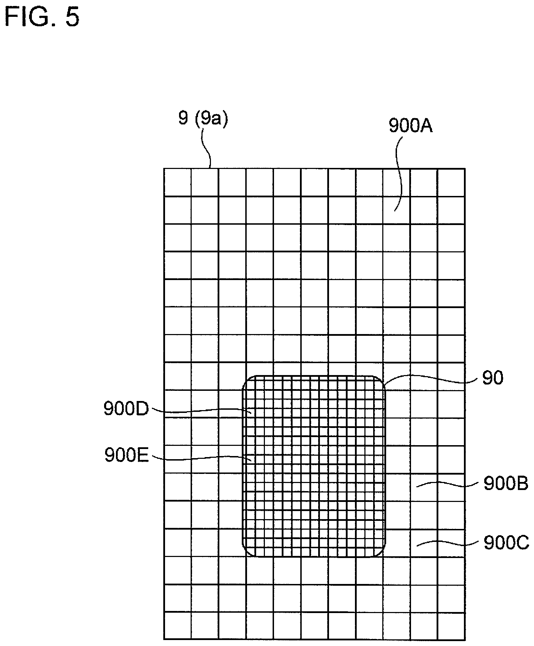

In the above described method for determining an accommodation condition, a plurality of cutting conditions may be selected for the radioactive waste 9, which contributes to reduction of the necessary storage container number X. Hereinafter, with reference to FIG. 5, an example of a method of cutting will be described, which determines the cutting manner for cutting the radioactive waste to obtain a plurality of waste pieces 900. In an embodiment, a cutting condition maybe set such that a high-dose portion of the radioactive waste is cut in small intervals (into small particle size) and a low-dose portion is cut in large intervals (into large particle size). As an example of such cutting condition, FIG. 5 shows an exemplary cutting condition for cutting the reactor internal structure 9a in the reactor 1 to obtain a plurality of high-dose waste pieces 900 (e.g. 900A to 900E).

The high dose region 90 in FIG. 5 represents a portion inside the reactor where the radiation level is particularly high. In the high dose region 90, the cutting condition is set such that cutting is performed with smaller particle size than in other portions inside the reactor internal structure 9a (for instance, particle size is greater in 900A to 900C than in 900D and 900E). Accordingly, it is possible accommodate the waste pieces 900 into each storage container 91 while finely adjusting the amount of high-dose waste pieces 900 (e.g. 900D and 900E in FIG. 5) which are cut out from the high dose region 90, and thus it is possible to easily maintain the surface dose rate of each storage container 91 within the allowable range. As the cutting condition for cutting the radioactive waste to obtain a plurality of waste pieces 900, a cutting condition other than the cutting condition B shown in FIG. 5 can be used.

In some embodiments, assuming a plurality of (M) cutting conditions $B_k$ that specify cutting patterns for cutting the radioactive waste 9 to obtain the plurality of waste pieces 900 (900A to 900C) (1≤k≤M, where M is an integer not less than two), for each of the plurality of cutting conditions $B_k$, the step of selecting an arrangement condition candidate $A_j$ and the step of calculating the necessary storage container number X are performed, and a combination of a cutting condition B and an arrangement condition candidate A such that the necessary storage container number X is minimum is specified.

For instance, in the embodiment shown in FIG. 4, from among the arrangement condition candidates in a case where the radioactive waste 9 is cut in accordance with the cutting condition $B_1$, the arrangement condition candidates $A_1$ and $A_2$ are selected as conditions that satisfy the limiting condition. The necessary storage container numbers X corresponding to the arrangement condition candidates $A_1$ and $A_2$ are five and four, respectively. Similarly, from among the arrangement condition candidates in a case where the radioactive waste 9 is cut in accordance with the cutting condition $B_2$, the arrangement condition candidates $A_5$ and $A_6$ are selected as conditions that satisfy the limiting condition. The necessary storage container numbers X corresponding to the arrangement condition candidates $A_5$ and $A_6$ are six

and five, respectively. Similarly, from among the arrangement condition candidates in a case where the radioactive waste 9 is cut in accordance with the cutting condition $B_3$, the arrangement condition candidate $A_8$ is selected as a condition that satisfy the limiting condition. The necessary storage container number X corresponding to the arrangement condition candidate $A_8$ is six. Accordingly, in the embodiment shown in FIG. 4 as example, as a combination of a cutting condition B and an arrangement condition candidate A such that the necessary storage container number X is minimum, the combination of the arrangement condition candidate $A_2$ and the cutting condition $B_1$ is specified.

As described above, according to the method described above with reference to FIG. 5, it is possible to define various cutting manners for cutting the radioactive waste 9 to obtain the plurality of waste pieces 900 as the plurality of cutting conditions B, and calculate an accommodation condition capable of reducing the number of waste bodies 950 obtained by accommodating the waste pieces 900 in the storage containers 91 for each of the plurality of cutting conditions. As a result, according to the method described above with reference to FIG. 5, it is possible to specify the most efficient combination of a cutting condition B and an arrangement condition A, as an accommodation condition capable of reducing the number of waste bodies 950 by accommodating the waste pieces 900 into the storage containers 91 efficiently.

In some embodiments, the above method of determining an accommodation condition in a container further includes a step of obtaining the dose distribution of the radioactive waste 9. In the step of selecting an arrangement condition candidate $A'_j$, an arrangement condition candidate $A'_j$ that satisfies the limiting condition defining at least that the surface dose rate of the waste body 950 (950A to 950C) is not higher than the threshold may be selected, on the basis of the obtained dose distribution.

When discarding or storing the waste bodies 950 (950A to 950C), it may be necessary to ensure safety and efficiency. The above method is beneficent in such cases. That is, according to the above method, the surface dose rate of each waste body 950 is set to be not higher than the threshold on the basis of the dose distribution of the radioactive waste 9, and thereby it is possible to reduce the number of necessary storage container number X, which is a number of storage containers required, while ensuring safety and efficiency in discarding or storing the waste body 950.

In some embodiments, the above method of determining an accommodation condition in a container further includes a step of measuring the dose distribution of the radioactive waste 9. In the step of selecting an arrangement condition candidate $A'_j$, an arrangement condition candidate $A'_j$ that satisfies the limiting condition defining at least that the surface dose rate of the waste body 950 (950A to 950C) is not higher than the threshold may be selected, on the basis of the measured dose distribution.

When discarding or storing the waste bodies 950 (950A to 950C), it may be necessary to ensure safety and efficiency. The above method is beneficent in such cases. That is, according to the above method, the surface dose rate of each waste body 950 is set to be not higher than the threshold on the basis of the dose distribution of the radioactive waste 9, and thereby it is possible to reduce the number of necessary storage container number X, which is a number of storage containers required, while ensuring safety and efficiency in discarding or storing the waste bodies 950.

Accordingly, in at least one embodiment of the present invention, the storage container 91 in which each waste piece 900 is to be stored and an accommodation position in the storage container are defined by the arrangement condition candidate A. Further, in at least one embodiment of the present invention, from among the plurality of arrangement condition candidates A; ($1 \leq i \leq N$), as an accommodation condition for accommodating waste pieces into a storage container, the arrangement condition candidate $A_o$ is determined, which is capable of reducing the necessary storage container number X, which is a number of storage containers 9 required to accommodate the plurality of waste pieces 900. Thus, according to at least one embodiment of the present invention, when accommodating the plurality of waste pieces 900 into at least one storage container 91 to obtain at least one waste body 950, it is possible to calculate an accommodation condition capable of reducing the amount of waste bodies 950.

In an embodiment, on the basis of the dose distribution, the arrangement condition candidate $A_j$ satisfying the limiting condition which defines at least that the surface dose rate of the waste body 950 is not higher than the threshold may be selected as follows.

For instance, for each case in which the radioactive waste 9 is cut in accordance with the plurality of cutting conditions $B_k$ ($1 \leq k \leq M$, where M is an integer not less than two), information on the dose of each waste piece 900 is obtained. At this time, the dose information of each waste piece 900 is managed in association with the corresponding cutting condition $B_k$. Accordingly, assuming that the plurality of waste pieces 900 cut under the particular cutting condition $B_k$ are accommodated in the storage container 91 in accordance with the particular arrangement condition candidate $A'_j$, it is possible to obtain the surface dose rate of the waste body 950 by combining the dose information per waste piece 900 for the plurality of waste pieces 900. Furthermore, it is determined whether the surface dose rate of the waste body 950 is not higher than the threshold, and thereby it is determined whether the arrangement condition candidate $A'_j$ satisfies the above limiting condition.

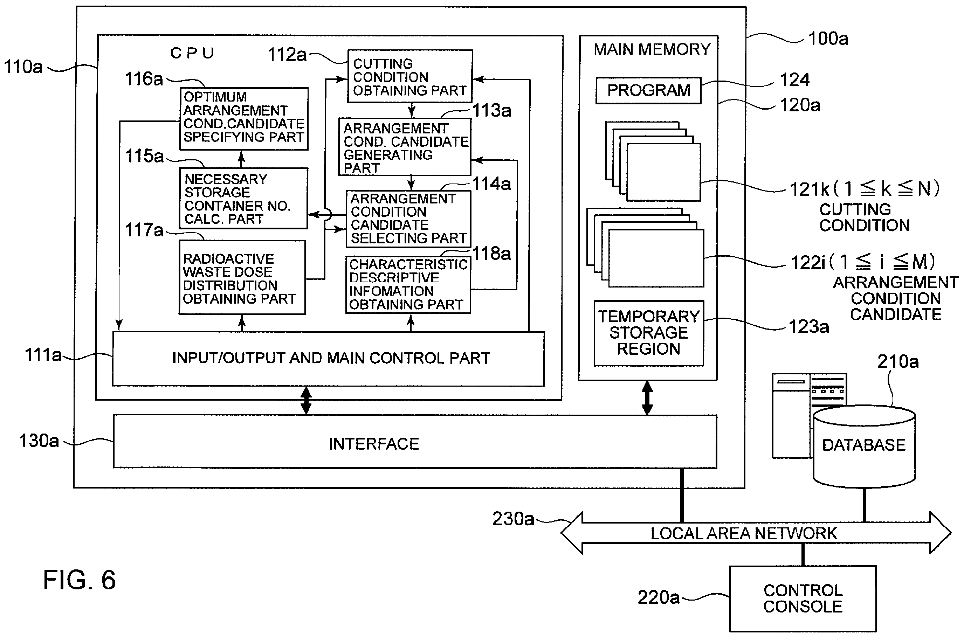

In an embodiment, the above described container accommodation condition determining method may be performed by using a computer program executed on a computer. For instance, in an embodiment, the above described container accommodation condition determining method may be performed by using a computer program 124 executed on a computer system 10 shown in FIG. 6.

The computer system 10 includes a computer 100a, a database 210a, and a control console 220 connected mutually to one another so as to be communicable via a local area network 230a. The computer 100a executes the computer program 124 in response to command from the control console 220a. The database 210a identifies each of one or more waste bodies 950 with identification information of a tag associated with each waste body 950, and stores characteristic descriptive information describing the physical characteristic condition of each waste body 950 in association with each waste body 950. The control console 220a may function as a terminal for a system user to provide command and information for the computer program 124 on the computer 100a, and for showing outputs of the computer program 124 on a display.

The computer 100a includes a CPU 110a, a main memory 120a, and an interface 130a. The CPU 110a reads and runs the computer program 124 stored on the main memory 120a. The main memory 120a stores information related to the plurality of (N) cutting conditions 121k ($1 \leq k \leq N$)and the plurality of (M) arrangement condition candidates 122i ($1 \leq i \leq M$). Furthermore, the main memory 120a stores data representing information other than the above in a temporary storage region 123a. The interface 130a provides a communication path for sending and receiving data and control signals between the CPU 110a, the main memory 120a, and the local area network 230a. The plurality of program modules or function constituting the computer program 124 may be read by the CPU 110a from the main memory 120a and executed as function modules 11a to 118a.

The input/output and main control part 111a functions as an input/output part for the above described function modules 112a to 118a to send and receive data and command signals between the main memory 120a, the database 210a, and the control console 220a. Furthermore, the input/output and main control part 111a has a role to control the overall flow of the series of processing operations executed by the above described function modules 112a to 118a. For instance, the series of processing operations executed by the above described modules 112a to 118a need to be executed repeatedly by loop control until finding a combination of a cutting condition and an arrangement condition candidate such that the necessary number of the storage container is minimum when all of the waste pieces are accommodated. Thus, the input/output and main control part 111a calls out the above described function modules 112a to 118a repeatedly for the number of repetitive executions controlled by the above loop control.

The arrangement condition candidate generating part 113a generates each of the plurality of arrangement condition candidates 122i ($1 \leq i \leq M$) defining the storage container 91 in which each of the waste pieces 900 is to be stored and the accommodation position inside the storage container 91. Next, the arrangement condition candidate selecting part 114a having received the plurality of arrangement condition candidates 122i ($1 \leq i \leq M$) generated by the arrangement condition candidate generating part 113a selects, assuming that the waste pieces 900 are arranged inside the storage container 91 in accordance with the plurality of arrangement condition candidates 122i ($1 \leq i \leq M$), one or more arrangement condition candidates 122j ($1 \leq j \leq M$) that satisfy the limiting condition required for the waste body, in each storage container 91.

After receiving the selected one or more arrangement condition candidates 122j ($1 \leq j \leq M$), the necessary storage container number calculation part 115a calculates the necessary storage container number X, which is the number of storage containers 91 required to accommodate the plurality of waste pieces 900 in accordance with the selected arrangement condition candidate 122j ($1 \leq j \leq M$). After receiving the plurality of arrangement condition candidates 122j ($1 \leq j \leq M$) and the necessary storage container number X calculated for each arrangement condition from the necessary storage container number calculation part 115a, the optimum arrangement condition candidate specifying part 116a specifies the arrangement condition candidate $122^{(0)}$ such that the necessary storage container number X is minimum, and outputs the same to the input/output and main control part 111a.

In at least one embodiment, the above process executed by the function modules 113a to 118a may be executed for each of the plurality of cutting conditions 121k ($1 \leq k \leq N$) of the radioactive waste. In such an embodiment, the cutting condition obtaining part 112a obtains the plurality of cutting conditions 121k ($1 \leq k \leq N$) and stores the obtained cutting conditions 121k ($1 \leq k \leq N$) in the main memory 120a. Next, the process for selecting the arrangement condition candidate 122j ($1 \leq j \leq M$) and the process for calculating the necessary storage container number X are obtained by the cutting condition obtaining part 112a, and repeatedly executed for each of the plurality of cutting conditions 121k ($1 \leq k \leq N$) stored in the main memory 120a. As a result, the optimum arrangement condition candidate specifying part 116a specifies a combination of the cutting condition 121k ($1 \leq k \leq N$) and the arrangement condition candidate 122j ($1 \leq j \leq M$) such that the necessary storage container number X is minimum.

In at least one embodiment, the cutting condition obtaining part 112a may obtain the characteristic descriptive information representing the characteristics of each of the plurality of waste pieces 900 on the basis of a measurement result of the dose distribution of the radioactive waste 9, and store the same in the database 210a. Furthermore, in at least one embodiment, in the process of selecting the arrangement condition candidate 122j ($1 \leq j \leq M$), the following operation may be executed. First, the characteristic descriptive information obtaining part 118a is instructed to obtain the characteristic descriptive information stored in the database 210a. Next, on the basis of the obtained characteristic descriptive information, the arrangement condition candidate selecting part 114a determines whether the limiting condition required for each waste body 950 is satisfied in each of the storage containers 91, in a case where the waste pieces 900 are arranged inside the storage container 91 in accordance with the arrangement condition candidate 122j ($1 \leq j \leq M$).

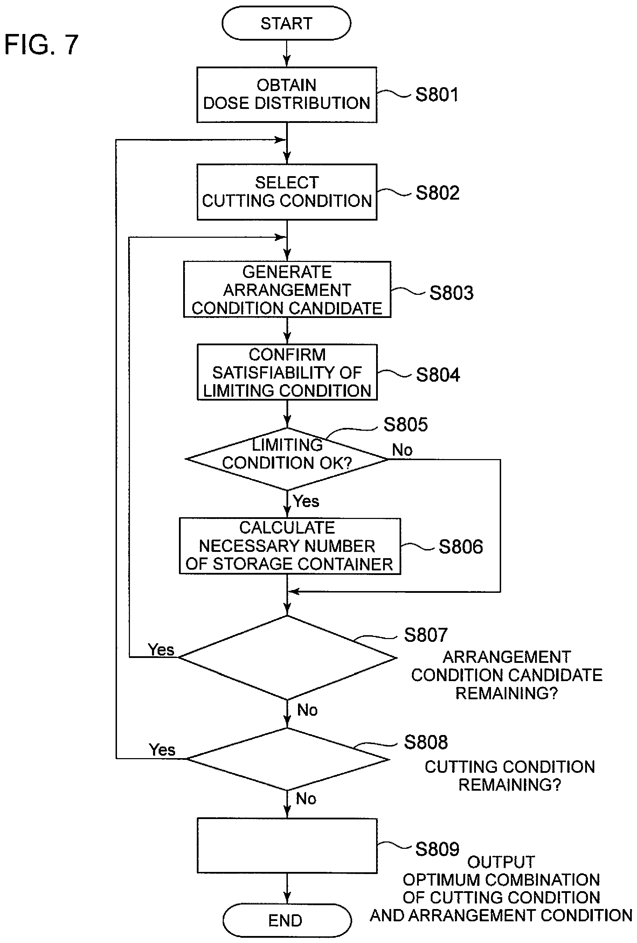

Hereinafter, the flow of the series of processing operations executed by the function modules 111a to 118a shown in FIG. 6 will be described along the flowchart of FIG. 7. The flowchart of FIG. 7 starts from the step S801, as the input/output and main control part 111a calls the dose distribution obtaining part 117a. The dose distribution obtaining part 117a obtains the dose distribution measurement data related to the radioactive waste before being cut into the plurality of waste pieces 900, and sends the dose distribution measurement data to the cutting condition obtaining part 112a via the main memory 120a.

Next, the cutting condition obtaining part 112a obtains the plurality of cutting conditions 121k ($1 \leq k \leq N$) of the radioactive waste referring to the dose distribution measurement data, and stores the obtained cutting conditions 121k ($1 \leq k \leq N$) in the main memory 120a. The arrangement condition candidate generating part 113a reads out the plurality of cutting conditions 121k ($1 \leq k \leq N$) from the main memory 120a, and selects one unselected cutting condition 121' from among the plurality of cutting conditions 121k ($1 \leq k \leq N$). Next, in step S803, the arrangement condition candidate generating part 113a generates one arrangement condition candidate 122j on the basis of the selected cutting condition 121', and stores the same in the main memory 120a.

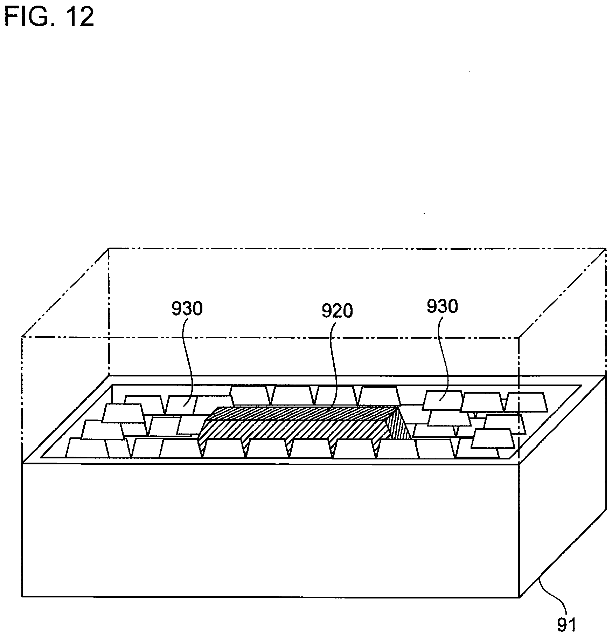

Next, in step S804, the arrangement condition candidate selecting part 114a reads out the arrangement condition candidate 122j from the main memory 120a, and determines whether the arrangement condition candidate 122j satisfies the limiting condition required for each waste body, by using the characteristic descriptive information of each waste piece obtained from the arrangement condition candidate generating part 113a. Next, in the step S 805, if the arrangement condition candidate selecting part 114a determines that the arrangement condition candidate 122j satisfies the predetermined limiting condition, the process advances to the step S806 in FIG. 7. If not, the process advances to the step S807 in FIG. 7. In step S805, the arrangement condition candidate selecting part 114a may select the arrangement condition candidate described below as follows, with reference to FIG. 12, as an arrangement condition candidate satisfying the above limiting condition. Specifically, the arrangement condition candidate selecting part 114a may select, as an arrangement condition candidate satisfying the above limiting condition, the arrangement condition candidate such that a low-dose waste piece 930 (FIG. 12) envelops a high-dose waste piece 920 (FIG. 12) disposed in the center section inside the storage container 91.

In the step S806 of FIG. 7, the necessary storage container number calculation part 115a calculates the necessary storage container number X for the arrangement condition candidate 122j, when receiving the arrangement condition candidate 122j determined by the arrangement condition candidate selecting part 114a to be a candidate satisfying the limiting condition. The necessary storage container number X is a predicted value of the number of storage containers 91 required to accommodate all of the plurality of waste pieces 900 in at least one storage container 91, in accordance each arrangement condition candidate. After the necessary storage container number calculation part 115a calculates the necessary storage container number X, the process advances to the step S807 in FIG. 7.

In the step S807 of FIG. 7, the arrangement condition candidate generating part 113a determines whether another arrangement condition candidate can be generated from the plurality of waste pieces 900 obtained by cutting the radioactive waste in accordance with the currently selected cutting condition 121'. If another arrangement condition candidate can be generated, the process returns to the step S803 of FIG. 7, and the arrangement condition candidate generating part 113a generates another arrangement condition candidate from the plurality of waste pieces 900 obtained by cutting the radioactive waste in accordance with the currently selected cutting condition 121'. In the step S807 of FIG. 7, if the arrangement condition candidate generating part 113a determines that no more arrangement condition candidate can be generated from the plurality of waste pieces 900 obtained in accordance with the currently selected cutting condition 121', the process advances to the step S808 of FIG. 7.

In the step S808 of FIG. 7, the cutting condition obtaining part 112a determines whether there is a remaining cutting condition not selected for the process from the steps S802 to S807 of FIG. 7, among the plurality of cutting conditions 121k ($1 \leq k \leq N$) stored in the main memory 120a. If there is a remaining unselected cutting condition, the process returns to the step S802, and the cutting condition obtaining part 112a re-selects an unselected cutting condition from among the plurality of cutting conditions 121k ($1 \leq k \leq N$) stored in the main memory 120a. If there is no remaining cutting condition unselected in the plurality of cutting conditions 121k ($1 \leq k \leq N$), the process advances to the step S809.

In the step S809, the optimum arrangement condition candidate specifying part 116a receives the plurality of arrangement condition candidates and the necessary storage container number X calculated for each arrangement condition from the necessary storage container number calculation part 115a, for all of the plurality of cutting conditions 121k ($1 \leq k \leq N$). Next, the optimum arrangement condition candidate specifying part 116a specifies an efficient combination of an arrangement condition candidate and a cutting condition such that the necessary number of the storage container 91 is minimum, from among the necessary storage container numbers X calculated for each of the arrangement condition candidates for each of the plurality of cutting conditions 121k ($1 \leq k \leq N$). Finally, the optimum arrangement condition candidate specifying part 116a outputs the specified optimum combination of the arrangement condition candidate and the cutting condition to the input/output and main control part 111a.

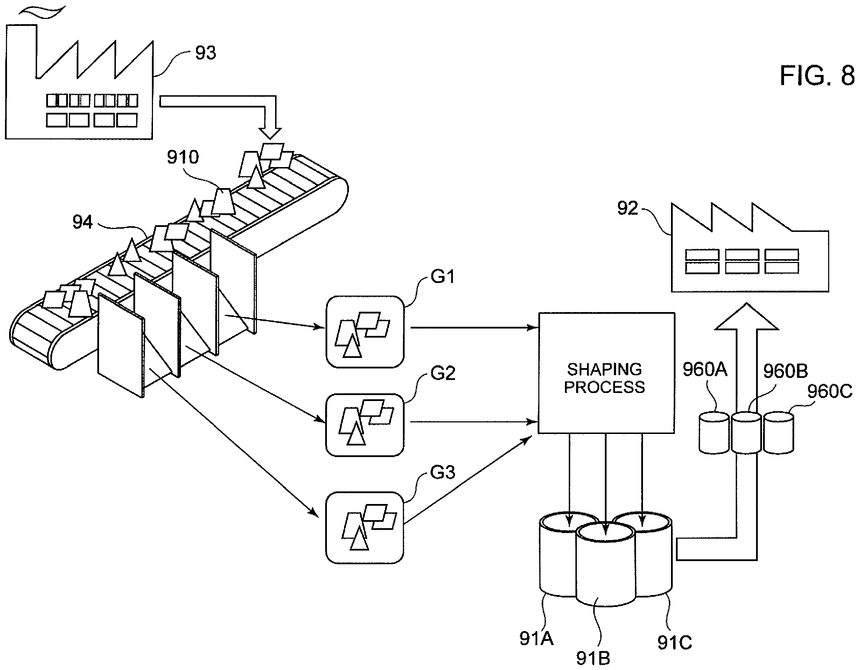

Next, a modified example for implementing the one or more embodiments described herein with partial correction will be described with reference to FIG. 8. For instance, as described above with reference to FIG. 5, the dose of each waste piece may differ depending on the location of cutting out the waste pieces 900 even within the same radioactive waste 9 (e.g. high-dose region 90 and the remaining region shown in FIG. 5).

Thus, in the embodiment shown in FIG. 8, the plurality of waste pieces 910 cut out from the reactor in accordance with a predetermined cutting condition and discharged from the nuclear power plant 93 may be sorted by dose. For instance, in an exemplary embodiment, the plurality of waste pieces 900 are sorted by a sorter 94 into high-dose pieces (G1 in FIG. 8), mid-dose pieces (G2 in FIG. 8), and low-dose pieces (G3 in FIG. 8). Next, in the present modified embodiment, in order to increase the filling rate of the waste pieces in each waste body and decrease the number of waste bodies, an appropriate shaping process is performed on the waste pieces 900 sorted by dose. Next, in the modified embodiment, the arrangement condition capable of producing the necessary number of storage containers is determined. In accordance with the determined arrangement condition, all of the waste pieces 910 are accommodated inside the at least one storage container 91, to produce at least one waste body 960 (960A to 960C) and store the same in the storage building 92.

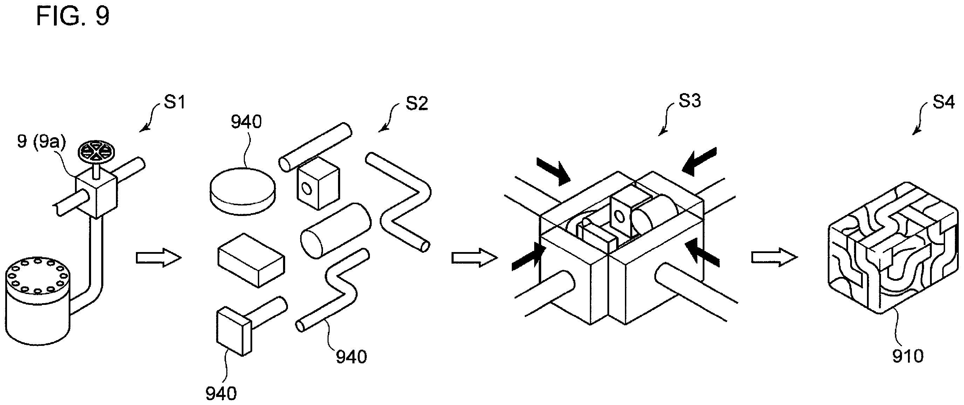

In the exemplary embodiment shown in FIG. 9, the plurality of segments 940 obtained by cutting the radioactive waste 9 are shaped by compression to obtain a plurality of waste pieces having a standardized shape (including dimension), and then the plurality of waste pieces 910 may be accommodated in the at least one storage container 91 in accordance with a suitable arrangement condition. Hereinafter, the standardized shape (including dimension) of the waste piece will be referred to as standardized shape.

In an exemplary embodiment, for example, a standardized shape may a shape having dimensions of length, width, and height obtained by dividing the length of the long side, the length of the short side, and the depth, respectively, of the accommodation space cross section inside the storage container 91 by an appropriate integer, rounding down the fractions. Furthermore, as an example of the method of determining the standardized shape, the waste pieces 910 may be shaped by compression so that the length, width, and height dimensions of the waste pieces 910 become the dimensions obtained by dividing the length of the long side, the length of the short side, and the depth, respectively, of the accommodation space cross section inside the storage container 91 by an appropriate integer, rounding down the fractions. More specifically, provided that Lx, Ly, and Lz are the length of the long side, the length of the short side, and the depth of the accommodation space cross section inside the storage container 91, respectively, appropriate integers $\alpha$, $\beta$, and y may be used to calculate the dimensions lx, ly, and lz, of the length, width, and height of the standardized shape. (Expression 1)

$$lx = \left\lfloor Lx/\alpha \right\rfloor, \quad ly = \left\lfloor Ly/\beta \right\rfloor, \quad lz = \left\lfloor Lz/\gamma \right\rfloor \qquad (1)$$

In an exemplary embodiment, the above described compression shaping process may be performed by a cutting process, a compression process, a melting process, or combination of the above, for the plurality of segments 940 cut out from the radioactive waste 9. In an embodiment, the radioactive waste 9 may include a reactor internal structure 9a cut by a cutting tool. In an embodiment, the plurality of segments 940 obtained by cutting the radioactive waste may be sorted according to the radiation level, by the sorter 94 shown in FIG. 8, for example.

In FIG. 9, the radioactive waste 9 (S1 in FIG. 9) is cut into the plurality of segments 940 to be scrapped (S2 in FIG. 9), and the plurality of segments 940 are shaped by compression from front and rear, right and left, and top and bottom by plate-shaped pressing members of a compressing device used for the compression shaping process (S3 in FIG. 9), so as to be shaped into cubes with standardized dimensions. Furthermore, in an embodiment, the compression shaping process described above with reference to FIG. 9 may be performed as the shaping process performed for the waste pieces 910, after sorting the waste pieces 910 by the sorter 94 in the disposal procedure shown in FIG. 8.

Furthermore, in a case where the plurality of segments 940 obtained by cutting the radioactive waste are sorted by dose as in the modified embodiment shown in FIG. 8 and the segments are shaped by compression by each of the sorted radiation levels, it is possible to provide a plurality of standardized shapes having a plurality of sizes or particle sizes corresponding to the plurality of radiation levels. For instance, a standardized shape corresponding to a high radiation level may be set to have small dimensions for a small size or a small particle size, and a standardized shape corresponding to a low radiation level may be set to have large dimensions for a large size or a large particle size. In an exemplary embodiment, the waste pieces 910 having a standardized shape having various length, width, and height dimensions corresponding to various particle sizes may be obtained as follows. Specifically, the integers $\alpha$, $\beta$, and $\gamma$ used to divide the above described Lx, Ly, and Lz, which are the length of the long side, the length of the short side, and the depth, of the accommodation space cross section inside the storage container 91, are adjusted in accordance with a target particle size. Then, the dimensions lx, ly, and lz of length, width, and height of the standardized shape are calculated in accordance with the above expression (1). Accordingly, the high-dose waste pieces have a standardized shape of small dimensions, and thus it is possible to prevent accommodating a great amount of high-dose pieces at once in one storage container. That is, the high-dose waste pieces have a standardized shape of small dimension, and thus it is possible to accommodate the high-dose waste pieces in each storage container while finely adjusting the amount of high-dose waste pieces, and to keep the surface dose rate of each storage container in the allowable range.

Therefore, according to the embodiment shown in FIG. 9 for example, it is possible to accommodate the waste pieces into a storage container after shaping the plurality of waste pieces obtained by cutting the radioactive waste into waste piece having a standardized shape (including dimensions). Thus, according to this embodiment, it is possible to considerably simplify the computation process for determining the accommodation condition capable of reducing the amount of waste bodies obtained by accommodating the waste pieces in the storage container, and to calculate the accommodation condition such that the waste pieces can be stuffed into the storage container with smallest possible clearance. In this case, the length, width, and height dimensions of the standardized shape adopted for the calculated accommodation condition may be determined as follows. Specifically, the integers $\alpha$, $\beta$, and $\gamma$ used to divide the above described Lx, Ly, and Lz, which are the length of the long side, the length of the short side, and the depth, of the accommodation space cross section inside the storage container storage container 91, are adjusted in accordance with a target particle size. Then, the dimensions lx, ly, and lz of length, width, and height of the standardized shape are calculated in accordance with the above expression (1).

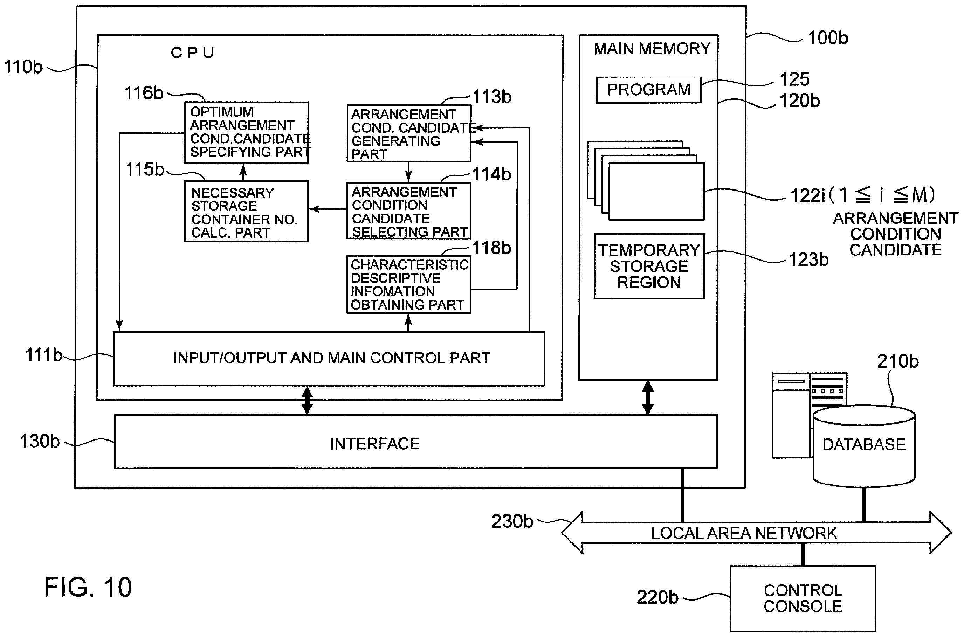

In an embodiment, the above embodiment shown in FIG. 9 may be performed by using a computer program 125 executed on a computer system 20 shown in FIG. 10, for instance. Hereinafter, for describing the system configuration according to the embodiment shown in FIG. 10, difference between the embodiment shown in FIG. 10 and the embodiment shown in FIG. 6 will be described, and the same configuration as that of the embodiment shown in FIG. 6 will not be described.

In the computer system 20 shown in FIG. 10, unlike the embodiment shown in FIG. 6, all of the waste pieces 910 are treated as being shaped into a simple standardized shape, and an efficient arrangement condition candidate can be determined without taking into account the plurality of cutting conditions. Furthermore, in the embodiment shown in FIG. 10, the surface dose rate, heat generation amount, and weight of the plurality of waste pieces 910 shaped into the standardized shape are obtained by preliminary actual measurement described below, and the actual measurement values are recorded in the database 210b. In an embodiment, the preliminary process may be performed involving a worker inside the nuclear power plant, prior to determination of the efficient arrangement condition candidate using the computer system 20. Furthermore, the characteristic descriptive information of each waste piece includes an actual measurement value actually measured in advance as described above for each of the plurality of waste pieces 910, and also may include information related to the kind of standardized shape if two or more standardized shapes are defined corresponding to a plurality of radiation levels.

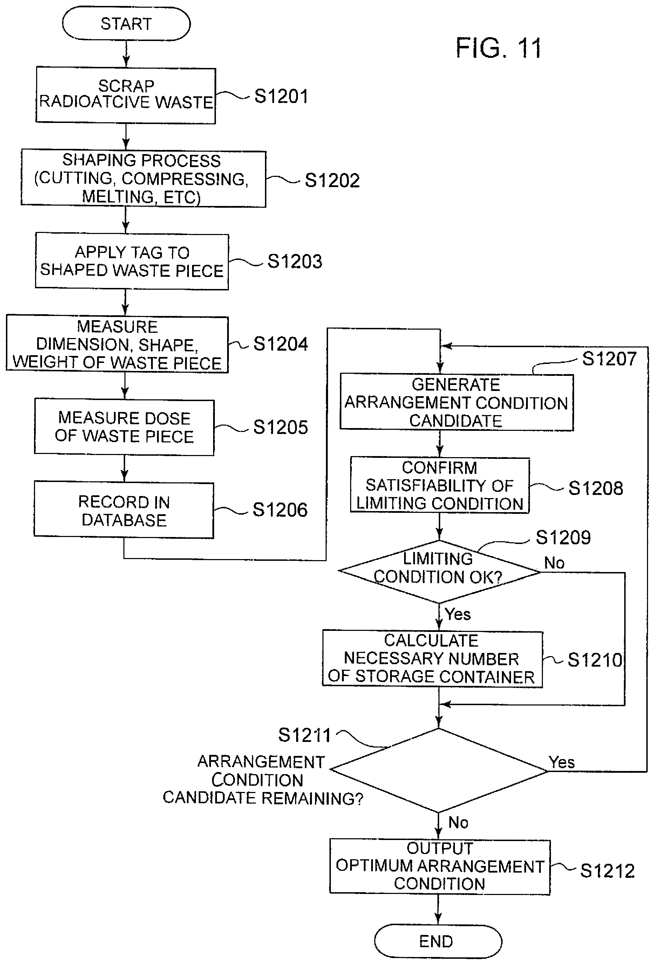

Hereinafter, the overall process flow of the embodiment shown in FIG. 10 will be described along the flowchart in FIG. 11. In the flowchart described in FIG. 11, the steps S1201 to S1206 correspond to the above described preliminary process, and include a process of compressing the plurality of segments obtained by cutting the radioactive waste and shaping the segments into the plurality of waste pieces having at least one kind of standardized shape, and a process of measuring the weight, dose, and heat generation amount of each of the waste pieces. In the flowchart shown in FIG. 11, the steps S1207 to S1212 correspond to the processes executed by the function modules 113 to 118 constituting the computer program 125 to determine the efficient arrangement condition candidate by using the computer system 20.

The process of the flowchart in FIG. 11 starts from the step S1201, and the radioactive waste is cut into a plurality of segments to be scrapped. Next, the process advances to the step S1202, and the plurality of segments are shaped to have a standardized shape. In a case where the plurality of segments are sorted by radiation level, the plurality of segments may be shaped in accordance with two or more kinds of standardized shape having different dimensions, for different radiation levels, to obtain the plurality of waste pieces 910.

Next, the process advances to the step S1203, and a tag is applied to each of the plurality of waste pieces 910. The tag applied to each of the plurality of waste pieces 910 includes records of identification information for specifically identifying each of the waste pieces 910. Next, the process advances to the step S1204, and the weight per waste piece is actually measured for each of the plurality of waste pieces. Furthermore, if two or more types of standardized shape are defined, it is also determined which type of standardized shape the plurality of waste pieces have. Next, the process advances to the step S1205, and the surface dose rate and heat generation amount per waste piece are actually measured for each of the plurality of waste pieces. Next, the process advances to the step S1206, and information is recorded on the database 210b, which represents the weight, type of standardized shape, surface dose rate, and heat generation amount, per waste piece actually measured or determined as described above, for each of the plurality of waste pieces. At this time, the information representing the weight, type of standardized shape, surface dose rate, and heat generation amount, per waste piece is recorded on the database 210b in association with the identification information per waste piece recorded on the tag attached to each of the plurality of waste pieces 910.

Next, the process advances to the step S1207 and so on. The steps S1207 to S1211 are similar to the steps S803 to S807 in FIG. 7, and the step S1212 is similar to the step S809 except that the cutting conditions are not considered. In step S1209, the arrangement condition candidate selecting part 114b may select the arrangement condition candidate described below as follows, with reference to FIG. 12, as an arrangement condition candidate satisfying the above limiting condition. Specifically, the arrangement condition candidate selecting part 114b may select, as an arrangement condition candidate satisfying the above limiting condition, the arrangement condition candidate such that low-dose waste pieces envelop a high-dose waste piece 910 disposed in the center section inside the storage container 91.

Another embodiment of the present invention will now be described in reference to FIG. 12. In the present embodiment, when accommodating the plurality of waste pieces 900 obtained by at least cutting the radioactive waste 9 (9a) and obtaining at least one waste body 950, the first waste piece 920 may be accommodated in the first region positioned in the center section of the storage container 91, and the second waste pieces 930 having a lower dose than the first waste piece 920 may be accommodated in the second region surrounding the first region inside the storage container 91, such that the second waste pieces 930 envelop the first waste piece 920.

Accordingly, if the selected arrangement condition candidate defines an arrangement (FIG. 12) such that the low-dose waste pieces 930 envelop the high-dose waste piece 920 inside the storage container 91, it is possible to reduce the dose that reaches the surface of the waste body 950 thanks to the function as the radiation insulator of the low-dose waste pieces 930 enveloping the high-dose waste piece 920, even in a case where the high-dose waste 920 is disposed inside the storage container 91. Thus, if the plurality of arrangement condition candidates 122i ($1 \leq i \leq M$) include a candidate defining the arrangement manner of the waste pieces as shown in FIG. 12, it is possible to increase the possibility of the arrangement condition candidate satisfying the limiting condition, even in a situation where few storage containers 91 are available and a large number of high-dose waste pieces 920 need to be accommodated in the container 91. As a result, compared to a typical accommodation method, it is possible to accommodate more high-dose waste pieces 920 inside the storage container 91, even if the number of available storage containers is limited. Thus, it is possible to increase the filling rate of the waste pieces 900 inside the storage container 91, and to reduce the number of waste bodies 950 compared to a typical accommodation method.

Furthermore, in the container accommodation condition determining method according to the embodiment with reference to FIGs. 1 to 11, the plurality of arrangement condition candidates 122i ($1 \leq i \leq M$) may include at least one arrangement condition candidate such that the first waste piece 920 is accommodated in the first region positioned in the center section of the storage container 91, and the second waste pieces 930 having a lower dose than the first waste piece 920 are accommodated in the second region surrounding the first region inside the storage container 91 so as to envelop the first waste piece 920. For instance, in the step S803 in the step FIG. 7 and the step S1207 in FIG. 11, the arrangement condition candidate generating parts 113a and 113b may include, in the plurality of arrangement condition candidates 122i ($1 \leq i \leq M$), an arrangement condition candidate determining the arrangement manner for the waste pieces 920, 930 described above.

Accordingly, if the selected arrangement condition candidate defines an arrangement (FIG. 12) such that the low-dose waste pieces 930 envelops the high-dose waste piece 920 inside the storage container 91, it is possible to reduce the dose that reaches the surface of the waste body 950 thanks to the function as the radiation insulator of the low-dose waste pieces 930 enveloping the high-dose waste piece 920, even in a case where the high-dose waste piece 920 is disposed inside the storage container 91. Thus, if the plurality of arrangement condition candidates include a candidate defining the arrangement manner of the waste pieces as shown in FIG. 12, it is possible to increase the possibility of the arrangement condition candidate satisfying the limiting condition, even in a situation where few storage containers 91 are available and a large number of high-dose waste pieces 920 need to be accommodated in the container 91. As a result, compared to a typical accommodation method, it is possible to accommodate more high-dose waste pieces 920 inside the storage container 91, even if the number of available storage containers is limited. Thus, it is possible to increase the filling rate of the waste pieces 900 inside the storage container 91, and to reduce the number of waste bodies 950 compared to a typical accommodation method.

Description of Reference Numerals

| | |
|---|---|
| 1 | Reactor |
| 9 | Radioactive waste |
| 9a | Reactor internal structure |
| 10, 20 | Computer system |
| 90 | High dose region |
| 91A, 91B, 91C, 91D | Storage container |
| 92 | Storage building |
| 93 | Nuclear power plant |

| | |
|---|---|
| 94 | Sorter |
| 100a, 100b | Computer |
| 110a, 100b | CPU |
| 111a, 111b | Input/output and main control part |
| 112a, 112b | Cutting condition obtaining part |
| 113a, 113b | Arrangement condition candidate generating part |
| 114a, 114b | Arrangement condition candidate selecting part |
| 115a, 115b | Necessary storage container number calculation part |
| 116a, 116b | Optimum arrangement condition candidate specifying part |
| 120a, 120b | Main memory |
| 121k (121k (1≤k≤N), 121') | Cutting condition |
| 122 (122i (1≤i≤M), 122') | Arrangement condition candidate |
| 123a, 123b | Temporary storage region |
| 124, 125 | Computer program |
| 130a, 130b | Interface |
| 210a, 210b | Database |
| 220a, 220b | Control console |
| 900 (900A, 900B, 900C, 900D, 900E) | Waste piece |
| 910, 920,930 | Waste piece |
| 940 | Segment |
| 950, 960 | Waste body |

**Claims**

1. A container accommodation condition determination method of determining an accommodation condition for accommodating a plurality of waste pieces (900), obtained by cutting radioactive waste (9), into at least one storage container (91), for obtaining at least one waste body (950) by accommodating the plurality of waste pieces into the at least one storage container, the method comprising:

   a step (S801, S1205) of obtaining dose information of each of the plurality of waste pieces;
   a step of, assuming, for each of a plurality of arrangement condition candidates (122) specifying the storage container (91) in which each of the waste pieces (900) is to be stored and an accommodation position inside the storage container (91), that the waste pieces (900) are arranged inside the storage container (91) in accordance with the arrangement condition candidate (122), and of selecting at least one of the arrangement condition candidates which satisfy a limiting condition required for the waste body in each of the storage containers;
   a step (S806, S1210) of calculating a necessary storage container number which is the number of storage containers required to accommodate the plurality of waste pieces in accordance with the selected arrangement condition candidate (122); and
   a step of specifying the arrangement condition candidate such that the necessary storage container number is minimum,
   wherein the step of selecting the arrangement condition candidate includes

      obtaining a surface dose rate of the waste body (950) in a case where each of the waste pieces is arranged at the accommodation position in the storage container specified by the arrangement condition candidate (122) on the basis of the dose information of each of the waste pieces (900), and
      selecting the arrangement condition candidate (122) satisfying the limiting condition at least specifying that the surface dose rate of the waste body (950) is not higher than a threshold.

2. The container accommodation condition determination method according to claim 1, comprising
   performing, for each of a plurality of cutting conditions (121k) for cutting the radioactive waste (S808), the step of selecting the arrangement condition candidate (122) and the step (S806) of calculating the necessary storage container number, and
   specifying a combination of the cutting condition and the arrangement condition candidate such that the necessary storage container number is minimum (S809).

3. The container accommodation condition determination method according to claim 1 or 2, further comprising

a step (S 1205) of measuring a dose distribution of the radioactive waste,
wherein the step of selecting the arrangement condition candidate includes selecting the arrangement condition candidate (122) satisfying the limiting condition which at least specifies that a surface dose rate of the waste body is not higher than a threshold on the basis of the dose distribution.

**4.** The container accommodation condition determination method according to claim 1 or 2, further comprising
a step (S801) of obtaining a dose of each of the waste pieces,
wherein the step of selecting the arrangement condition candidate includes selecting the arrangement condition candidate satisfying the limiting condition which at least specifies that a surface dose rate of the waste body is not higher than a threshold on the basis of the dose of the waste pieces.

**5.** The container accommodation condition determination method according to any one of claims 1 to 4, further comprising a step of storing, in a database (210a, 210b), characteristic descriptive information showing a characteristic of each of the plurality of waste pieces (900),
wherein the step of selecting the arrangement condition candidate (122) includes determining (S805, S1209) whether the limiting condition required for the waste body is satisfied in each of the storage containers when the waste pieces are arranged in the storage containers in accordance with the arrangement condition candidate, on the basis of the characteristic descriptive information stored in the database.

**6.** The container accommodation condition determination method according to claim 5,
wherein the characteristic descriptive information includes at least one of a shape, a weight, or a dose, of each of the waste pieces.

**7.** The container accommodation condition determination method according to any one of claims 1 to 6, further comprising a step (S3) of compressing a plurality of segments (940) obtained by cutting the radioactive waste (9) to shape the segments into the plurality of waste pieces (910) having at least one kind of standardized shape.

**8.** The container accommodation condition determination method according to any one of claims 1 to 7, wherein the limiting condition required for the waste body (950) includes a condition such that at least one of a weight, a surface dose rate, or a heat generation amount, of each of the waste bodies is within an allowable range.

**9.** The container accommodation condition determination method according to any one of claims 1 to 8,
wherein the plurality of arrangement condition candidates (122) include at least one arrangement condition candidate specifying that, inside each of the storage containers, a first waste piece (920) is accommodated in a first region disposed in a center section of the storage container (91) and a second waste piece (930) is disposed in a second region surrounding the first region in the storage container (91) so as to envelope the first waste piece (920), the second waste piece (930) having a lower dose than the first waste piece (920).

**10.** A radioactive waste accommodation method, comprising a step of accommodating the waste pieces (900) inside the storage container (91) in accordance with the accommodation condition determined by the container accommodation condition determination method according to any one of claims 1 to 9 to obtain at least one waste body.

## Patentansprüche

**1.** Behälteraufnahmebedingungsbestimmungsverfahren zum Bestimmen einer Aufnahmebedingung zum Aufnehmen einer Vielzahl von Abfallstücken (900), die durch Zerschneiden von radioaktivem Abfall (9) erhalten werden, in mindestens einem Speicherbehälter (91) zum Erhalten von mindestens einem Abfallkörper (950) durch Aufnehmen der Vielzahl von Abfallstücken in dem mindestens einen Speicherbehälter, wobei das Verfahren Folgendes umfasst:

einen Schritt (S801, S1205) des Erhaltens von Dosisinformationen von jedem der Vielzahl von Abfallstücken;
für jeden einer Vielzahl von Aufnahmebedingungskandidaten (122), die den Speicherbehälter (91), in dem jedes der Abfallstücke (900) zu lagern ist, und eine Aufnahmeposition im Speicherbehälter (91) spezifizieren, einen Schritt des Annehmens, dass die Abfallstücke (900) im Speicherbehälter (91) gemäß dem Aufnahmebedingungskandidaten (122) angeordnet sind, und des Auswählens von mindestens einem der Aufnahmebedingungskandidaten, die eine Begrenzungsbedingung, die für den Abfallkörper in jedem der Speicherbehälter erforderlich ist, erfüllen;
einen Schritt (S806, S1210) des Berechnens einer notwendigen Speicherbehälteranzahl, die die Anzahl von Speicherbehältern ist, die zum Aufnehmen der Vielzahl von Abfallstücken gemäß dem ausgewählten Aufnahmebedingungskandidaten (122) erforderlich ist; und
einen Schritt des Spezifizierens des Aufnahmebedingungskandidaten derart, dass die notwendige Speicherbehälteranzahl ein Minimum ist,
wobei der Schritt des Auswählens des Aufnahmebedingungskandidaten Folgendes beinhaltet
in einem Fall, in dem jedes der Abfallstücke in der Aufnahmeposition im Speicherbehälter angeordnet ist, die vom Aufnahmebedingungskandidaten (122) spezifiziert ist, Erhalten einer Oberflächendosisrate des Abfallkörpers (950) auf Basis der Dosisinformationen jedes der Abfallstücke (900), und
Auswählen des Aufnahmebedingungskandidaten (122), der die Begrenzungsbedingung erfüllt, die mindestens spezifiziert, dass die Oberflächendosisrate des Abfallkörpers (950) nicht höher als ein Schwellwert ist.

2. Behälteraufnahmebedingungsbestimmungsverfahren nach Anspruch 1, das Folgendes umfasst
Durchführen des Schritts des Auswählens des Aufnahmebedingungskandidaten (122) und des Schritts (S806) des Berechnens der notwendigen Speicherbehälteranzahl für jede einer Vielzahl von Zerschneidebedingungen (121k) zum Zerschneiden des radioaktiven Abfalls (S808), und
Spezifizieren einer Kombination der Zerschneidebedingung und des Aufnahmebedingungskandidaten derart, dass die notwendige Speicherbehälteranzahl ein Minimum ist (S809).

3. Behälteraufnahmebedingungsbestimmungsverfahren nach Anspruch 1 oder 2, das ferner Folgendes umfasst
einen Schritt (S1205) des Messens einer Dosisverteilung des radioaktiven Abfalls,
wobei der Schritt des Auswählens des Aufnahmebedingungskandidaten das Auswählen des Aufnahmebedingungskandidaten (122), der die Begrenzungsbedingung erfüllt, die mindestens spezifiziert, dass eine Oberflächendosisrate des Abfallkörpers nicht höher als ein Schwellwert ist, auf Basis der Dosisverteilung beinhaltet.

4. Behälteraufnahmebedingungsbestimmungsverfahren nach Anspruch 1 oder 2, das ferner Folgendes umfasst
einen Schritt (S801) des Erhaltens einer Dosis von jedem der Abfallstücke,
wobei der Schritt des Auswählens des Aufnahmebedingungskandidaten das Auswählen des Aufnahmebedingungskandidaten, der die Begrenzungsbedingung erfüllt, die mindestens spezifiziert, dass eine Oberflächendosisrate des Abfallkörpers nicht höher als ein Schwellwert ist, auf Basis der Dosis der Abfallstücke beinhaltet.

5. Behälteraufnahmebedingungsbestimmungsverfahren nach einem der Ansprüche 1 bis 4, das ferner einen Schritt des Speicherns von charakteristischen beschreibenden Informationen, die eine Charakteristik von jedem der Vielzahl von Abfallstücken (900) zeigen, in einer Datenbank (210a, 210b) umfasst,
wobei der Schritt des Auswählens des Aufnahmebedingungskandidaten (122) das Bestimmen (S805, S1209), ob die Begrenzungsbedingung, die für den Abfallkörper erforderlich ist, in jedem der Speicherbehälter erfüllt ist, wenn die Abfallstücke in den Speicherbehältern gemäß dem Aufnahmebedingungskandidaten angeordnet sind, auf Basis der charakteristischen beschreibenden Informationen, die in der Datenbank gespeichert sind, beinhaltet.

6. Behälteraufnahmebedingungsbestimmungsverfahren nach Anspruch 5,
wobei die charakteristischen beschreibenden Informationen mindestens eines von einer Form, einem Gewicht oder einer Dosis, von jedem der Abfallstücke beinhalten.

7. Behälteraufnahmebedingungsbestimmungsverfahren nach einem der Ansprüche 1 bis 6, das ferner einen Schritt (S3) des Komprimierens einer Vielzahl von Segmenten (940), die durch Zerschneiden des radioaktiven Abfalls (9) erhalten werden, um die Segmente in die Vielzahl von Abfallstücken (910), die mindestens eine Art einer standardisierten Form aufweisen, zu formen, umfasst.

8. Behälteraufnahmebedingungsbestimmungsverfahren nach einem der Ansprüche 1 bis 7, wobei die Begrenzungsbedingung, die für den Abfallkörper (950) erforderlich ist, eine Bedingung beinhaltet, dass mindestens eines von einem Gewicht, einer Oberflächendosisrate oder einer Wärmeerzeugungsmenge von jedem der Abfallkörper innerhalb eines zulässigen Bereichs liegt.

9. Behälteraufnahmebedingungsbestimmungsverfahren nach einem der Ansprüche 1 bis 8,
wobei die Vielzahl von Aufnahmebedingungskandidaten (122) mindestens einen Aufnahmebedingungskandidaten beinhalten, der spezifiziert, dass in jedem der Speicherbehälter ein erstes Abfallstück (920) in einer ersten Region aufgenommen ist, die in einem mittleren Abschnitt des Speicherbehälters (91) platziert ist, und ein zweites Abfallstück (930) in einer zweiten Region platziert ist, die die erste Region im Speicherbehälter (91) umgibt, um das erste Abfallstück (920) zu umhüllen, wobei das zweite Abfallstück (930) eine niedrigere Dosis aufweist als das erste Abfallstück (920).

10. Aufnahmeverfahren für radioaktiven Abfall, das einen Schritt des Aufnehmens der Abfallstücke (900) im Speicherbehälter (91) gemäß der Aufnahmebedingung, die durch das Behälteraufnahmebedingungsbestimmungsverfahren nach einem der Ansprüche 1 bis 9 bestimmt wird, um mindestens einen Abfallkörper zu erhalten, umfasst.

## Revendications

1. Procédé de détermination de condition de réception d'un conteneur consistant à déterminer une condition de réception pour recevoir une pluralité de morceaux de déchets (900), obtenus en découpant des déchets radioactifs (9), dans au moins un conteneur de stockage (91), pour obtenir au moins un corps de déchets (950) en recevant la pluralité de morceaux de déchets dans le au moins un conteneur de stockage, le procédé comprenant :

   une étape (S801, S1205) d'obtention d'informations de dose de chacun de la pluralité de morceaux de déchets ;
   une étape de supposition, pour chacun d'une pluralité de candidats de conditions d'agencement (122) spécifiant le conteneur de stockage (91) dans lequel chacun des morceaux de déchets (900) doit être stocké et une position de réception à l'intérieur du conteneur de stockage (91), que les morceaux de déchets (900) sont agencés à l'intérieur du conteneur de stockage (91) conformément au candidat de condition d'agencement (122), et de sélection d'au moins l'un des candidats de conditions d'agencement qui satisfait à une condition de limitation requise pour le corps de déchets dans chacun des conteneurs de stockage ;
   une étape (S806, S1210) de calcul d'un nombre de conteneurs de stockage nécessaires qui est le nombre de conteneurs de stockage requis pour recevoir la pluralité de morceaux de déchets conformément au candidat de condition d'agencement (122) sélectionné ; et
   une étape de spécification du candidat de condition d'agencement de sorte que le nombre de conteneurs de stockage nécessaires soit minimal,
   dans lequel l'étape de sélection du candidat de condition d'agencement comporte
   l'obtention d'un débit de dose de surface du corps de déchets (950) dans un cas où chacun des morceaux de déchets est agencé à la position de réception dans le conteneur de stockage spécifié par le candidat de condition d'agencement (122) sur la base des informations de dose de chacun des morceaux de déchets (900), et
   la sélection du candidat de condition d'agencement (122) satisfaisant à la condition de limitation spécifiant au moins que le débit de dose de surface du corps de déchets (950) n'est pas supérieur à un seuil.

2. Procédé de détermination de condition de réception d'un conteneur selon la revendication 1, comprenant
   la réalisation, pour chacune d'une pluralité de conditions de découpe (121k) pour découper les déchets radioactifs (S808), de l'étape de sélection du candidat de condition d'agencement (122) et de l'étape (S806) de calcul du nombre de conteneurs de stockage nécessaires, et
   la spécification d'une combinaison de la condition de découpe et du candidat de condition d'agencement de sorte que le nombre de conteneurs de stockage nécessaires soit minimal (S809).

3. Procédé de détermination de condition de réception d'un conteneur selon la revendication 1 ou 2, comprenant en outre
   une étape (S1205) de mesure d'une distribution de doses des déchets radioactifs,
   dans lequel l'étape de sélection du candidat de condition d'agencement comporte la sélection du candidat de condition d'agencement (122) satisfaisant à la condition de limitation qui spécifie au moins qu'un débit de dose de surface du corps de déchets n'est pas supérieur à un seuil sur la base de la distribution de doses.

4. Procédé de détermination de condition de réception d'un conteneur selon la revendication 1 ou 2, comprenant en outre
   une étape (S801) d'obtention d'une dose de chacun des morceaux de déchets,
   dans lequel l'étape de sélection du candidat de condition d'agencement comporte la sélection du candidat de condition d'agencement satisfaisant à la condition de limitation qui spécifie au moins qu'un débit de dose de surface du corps de déchets n'est pas supérieur à un seuil sur la base de la dose des morceaux de déchets.

5. Procédé de détermination de condition de réception d'un conteneur selon l'une quelconque des revendications 1 à 4, comprenant en outre une étape de stockage, dans une base de données (210a, 210b), d'informations descriptives de caractéristiques montrant une caractéristique de chacun de la pluralité de morceaux de déchets (900),
   dans lequel l'étape de sélection du candidat de condition d'agencement (122) comporte le fait de déterminer (S805, S1209) si la condition de limitation requise pour le corps de déchets est satisfaite dans chacun des conteneurs de stockage lorsque les morceaux de déchets sont agencés dans les conteneurs de stockage conformément au candidat de condition d'agencement, sur la base des informations descriptives de caractéristiques stockées dans la base de données.

**6.** Procédé de détermination de condition de réception d'un conteneur selon la revendication 5, dans lequel les informations descriptives de caractéristiques comportent au moins l'un parmi une forme, un poids, ou une dose, de chacun des morceaux de déchets.

**7.** Procédé de détermination de condition de réception d'un conteneur selon l'une quelconque des revendications 1 à 6, comprenant en outre une étape (S3) de compression d'une pluralité de segments (940) obtenus en découpant les déchets radioactifs (9) pour former les segments dans la pluralité de morceaux de déchets (910) ayant au moins un genre de forme normalisée.

**8.** Procédé de détermination de condition de réception d'un conteneur selon l'une quelconque des revendications 1 à 7, dans lequel la condition de limitation requise pour le corps de déchets (950) comporte une condition de sorte qu'au moins l'un parmi un poids, un débit de dose de surface, ou une quantité de génération de chaleur, de chacun des corps de déchets se situe dans une plage admissible.

**9.** Procédé de détermination de condition de réception d'un conteneur selon l'une quelconque des revendications 1 à 8, dans lequel la pluralité de candidats de conditions d'agencement (122) comportent au moins un candidat de condition d'agencement spécifiant que, à l'intérieur de chacun des conteneurs de stockage, un premier morceau de déchet (920) est reçu dans une première région disposée dans une section centrale du conteneur de stockage (91) et un deuxième morceau de déchet (930) est disposé dans une deuxième région entourant la première région dans le conteneur de stockage (91) de manière à envelopper le premier morceau de déchet (920), le deuxième morceau de déchet (930) ayant une dose plus faible que le premier morceau de déchet (920).

**10.** Procédé de réception de déchets radioactifs, comprenant une étape de réception des morceaux de déchets (900) à l'intérieur du conteneur de stockage (91) conformément à la condition de réception déterminée par le procédé de détermination de condition de réception de conteneur selon l'une quelconque des revendications 1 à 9 pour obtenir au moins un corps de déchets.

FIG. 1

1
9 (9a)
900
900
900
900
91A
91B
91C
92
950A
950B
950C

FIG. 2
900
1ST CONTAINER
91-1
2ND CONTAINER
91-2
3RD CONTAINER
91-3
4th CONTAINER AND SO ON
(NOT SHOWN)
(A-1)
900
1ST CONTAINER
91-1
2ND CONTAINER
91-2
3RD CONTAINER
91-3
4th CONTAINER AND SO ON
(NOT SHOWN)
(A-2)
1ST CONTAINER
91-1
2ND CONTAINER
91-2
3RD CONTAINER
91-3
4th CONTAINER AND SO ON
(NOT SHOWN)
(A-3)

FIG. 3
900
1ST CONTAINER
91-1
2ND CONTAINER
91-2
3RD CONTAINER
91-3
......
4th CONTAINER AND SO ON
(NOT SHOWN)
(B-1)
1ST CONTAINER
91-1
2ND CONTAINER
91-2
3RD CONTAINER
91-3
......
4th CONTAINER AND SO ON
(NOT SHOWN)
(B-2)
900
1ST CONTAINER
91-1
2ND CONTAINER
91-2
3RD CONTAINER
91-3
......
4th CONTAINER AND SO ON
(NOT SHOWN)
(B-3)

FIG. 4

| CUTTING CONDITION | ARRANGEMENT CONDITION | SATISFIABILITY OF LIMITATION | NUMBER OF CONTAINER (X) |
|---|---|---|---|
| $B_1$ | $A_1$ | YES | 5 |
| | $A_2$ | YES | 4 |
| | $A_3$ | NO | — |
| | ⋮ | ⋮ | ⋮ |
| $B_2$ | $A_4$ | NO | — |
| | $A_5$ | YES | 6 |
| | $A_6$ | YES | 5 |
| | ⋮ | ⋮ | ⋮ |
| $B_3$ | $A_7$ | NO | — |
| | $A_8$ | YES | 6 |
| | $A_9$ | NO | — |
| | ⋮ | ⋮ | ⋮ |
| ⋮<br>⋮ | ⋮<br>⋮ | ⋮<br>⋮ | ⋮<br>⋮ |

FIG. 5

9 (9a)
900A
90
900D
900E
900B
900C

CPU
112a
CUTTING CONDITION OBTAINING PART
110a
116a
OPTIMUM ARRANGEMENT COND.CANDIDATE SPECIFYING PART
113a
ARRANGEMENT COND. CANDIDATE GENERATING PART
115a
NECESSARY STORAGE CONTAINER NO. CALC. PART
114a
ARRANGEMENT CONDITION CANDIDATE SELECTING PART
117a
RADIOACTIVE WASTE DOSE DISTRIBUTION OBTAINING PART
118a
CHARACTERISTIC DESCRIPTIVE INFOMATION OBTAINING PART
111a
INPUT/OUTPUT AND MAIN CONTROL PART
MAIN MEMORY
100a
PROGRAM
124
120a
121k（1 ≦ k ≦ N）
CUTTING CONDITION
122i（1 ≦ i ≦M）
ARRANGEMENT CONDITION CANDIDATE
TEMPORARY STORAGE REGION
123a
210a
DATABASE
130a
INTERFACE
230a
LOCAL AREA NETWORK
220a
CONTROL CONSOLE

FIG. 6

FIG. 7
START
OBTAIN DOSE DISTRIBUTION
S801
SELECT CUTTING CONDITION
S802
GENERATE ARRANGEMENT CONDITION CANDIDATE
S803
CONFIRM SATISFIABILITY OF LIMITING CONDITION
S804
S805
LIMITING CONDITION OK?
No
Yes
CALCULATE NECESSARY NUMBER OF STORAGE CONTAINER
S806
S807
ARRANGEMENT CONDITION CANDIDATE REMAINING?
Yes
No
S808
CUTTING CONDITION REMAINING?
Yes
No
S809
OUTPUT OPTIMUM COMBINATION OF CUTTING CONDITION AND ARRANGEMENT CONDITION
END

FIG. 8

93
910
94
G1
G2
G3
SHAPING PROCESS
92
960A
960B
960C
91A
91B
91C

FIG. 9
S1
9 (9a)
S2
940
940
940
S3
S4
910

CPU
110b
116b
OPTIMUM ARRANGEMENT COND.CANDIDATE SPECIFYING PART
113b
ARRANGEMENT COND. CANDIDATE GENERATING PART
115b
NECESSARY STORAGE CONTAINER NO. CALC. PART
114b
ARRANGEMENT CONDITION CANDIDATE SELECTING PART
118b
CHARACTERISTIC DESCRIPTIVE INFOMATION OBTAINING PART
111b
INPUT/OUTPUT AND MAIN CONTROL PART
MAIN MEMORY
100b
PROGRAM
125
120b
122i ( 1 ≦ i ≦M)
ARRANGEMENT CONDITION CANDIDATE
TEMPORARY STORAGE REGION
123b
130b
INTERFACE
210b
DATABASE
230b
LOCAL AREA NETWORK
220b
CONTROL CONSOLE


FIG. 10

FIG. 11
START
SCRAP RADIOATCIVE WASTE
S1201
SHAPING PROCESS (CUTTING, COMPRESSING, MELTING, ETC)
S1202
APPLY TAG TO SHAPED WASTE PIECE
S1203
MEASURE DIMENSION, SHAPE, WEIGHT OF WASTE PIECE
S1204
MEASURE DOSE OF WASTE PIECE
S1205
RECORD IN DATABASE
S1206
GENERATE ARRANGEMENT CONDITION CANDIDATE
S1207
CONFIRM SATISFIABILITY OF LIMITING CONDITION
S1208
LIMITING CONDITION OK?
S1209
No
Yes
CALCULATE NECESSARY NUMBER OF STORAGE CONTAINER
S1210
ARRANGEMENT CONDITION CANDIDATE REMAINING?
S1211
Yes
No
OUTPUT OPTIMUM ARRANGEMENT CONDITION
S1212
END

FIG. 12

930
920
930
91

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015087300 A
- JP 62089000 A
- JP 2002207098 A
- JP 60146200 A
- JP 2014098596 A
- JP 2000065990 A
- JP 2011080873 A